# EUROPEAN PATENT SPECIFICATION

(11) **EP 2 198 721 B1**
(45) Date of publication and mention of the grant of the patent: **29.04.2015**
(21) Application number: 08836226.4
(22) Date of filing: 03.10.2008
(51) Int. Cl.: A23F 3/14

(54) **METHOD FOR PRODUCTION OF PROCESSED TEA**
VERFAHREN ZUR HERSTELLUNG VON VERARBEITETEM TEE
PROCÉDÉ POUR LA PRODUCTION D'UN THÉ TRAITÉ

(30) Priority: 05.10.2007 JP 2007261540
(43) Date of publication of application: 23.06.2010
(73) Proprietor: Kao Corporation, Chuo-ku Tokyo 103-8210 (JP)
(72) Inventor: FUKUDA, Masahiro, Tokyo 131-8501 (JP); ITAYA, Eri, Tokyo 131-8501 (JP); TAKAHASHI, Hirokazu, Tokyo 131-8501 (JP); KUSAKA, Ryo, Tokyo 131-8501 (JP)
(74) Representative: Hoffmann Eitle
(86) International application number: PCT/JP2008/002791
(87) International publication number: WO 2009/044559

(56) References cited:
- EP-A1- 1 690 457
- EP-A1- 1 785 038
- GB-A- 1 428 394
- JP-A- 11 221 018
- JP-A- 49 054 597
- JP-A- 2006 122 004
- JP-T- 2005 531 310
- DATABASE WPI Week 200546 Thomson Scientific, London, GB; AN 2005-458382 XP002603313 & WO 2005/053415 A1 (KAO CORP) 16 June 2005 (2005-06-16)

## Description

### Field of the Invention

This invention relates to a process for producing a processed tea, which contains eluting non-polymer catechins with water.

### Background of the Invention

Catechins are reported to have physiological effects, such as a cholesterol increase-suppressing effect and an amylase activity-inhibiting effect (Patent Documents 1 and 2). In order for such effects to materialize, a large amount of catechins need to be digested in a convenient way. Thus, there has been a demand for a technology by which high concentrations of catechins can be added to a beverage. As an example of such technologies, there is a method which uses a concentrated green tea extract, thereby enabling dissolved catechins to be added to the beverage (Patent Documents 3 to 5).

However, when non-polymer catechins obtained by dissolving such a conventional concentrated green tea extract into a liquid are ingested in high concentrations, there is a tendency such that the taste of catechins not only grows bitter and astringent taste, but also gives rise to more increasing bitterness, astringent taste, harshness and coarseness due to the presence of a plenty of other components contained in the concentrated green tea extract.

In the meantime, technologies have been proposed to improve the efficiency of extraction or to improve the taste and flavor, for example, by coating tea leaves with a soluble dry powder. For example, a production process of a tea product is disclosed in Patent Document 6, and the process includes a first step of combining a cheep black tea and a conventional instant tea powder into a mixture and then adding from 2 to 15 wt% of water to the mixture and a second step of drying the resulting slurry in air. However, the process is not suited for the provision of an extract solution with high quality, and is slow in extraction rate

Further, a tea bag for an iced tea beverage is disclosed in Patent Document 7. The tea bag contains a mixture of from 30 to 95 wt% of tea leaves and from 5 to 70 wit% of soluble dry tea solids. Its production process includes a step in which a concentrated extract is sprayed on tea leaves to coat the tea leaves with the soluble dry tea solids of the extract. However, the resulting beverage is strong in bitterness, astringent taste, harshness and coarseness due to a concentrated the green tea extract.

In addition, Patent Document 8 discloses a process for producing a tea processed with a powdered tea, which includes dusting a surface-moistened green tea with the powdered tea, coating surfaces of the green tea and powdered tea with an edible material such as starch, and drying them. In Patent Document 9, on the other hand, a drinkable composition is obtained by coating a flavor-containing granular formulation, which is composed of granules containing gum arabic as a base material and the flavor carried on the granules, with a tea powder in a rotating granulator. Further, Patent Document 10 discloses a process for the production of a processed tea product. The process includes mixing tea leaves with tea solids derived from a tea powder, moistening the resulting mixture with water at the same time, and then drying it. Furthermore, Patent Document 11 discloses a process that includes bringing a green tea extract into contact with activated clay and activated carbon in a mixed solution of an organic solvent and water to reduce the bitterness of the green tea extract.

Processed teas or powdered beverages produced by these processes are reduced in bitterness and astringent taste, but the refreshing attributes of the beverages are prone to impairment.

Patent document 12 (EP 1 690 457 A1) discloses high-catechin non-tea beverages in which a low caffeine green tea extract is added. It is suggested that the low-caffeine green tea extract of patent document 12, which is substantially free of the flavor of green tea, is incorporated in non-tea beverages, such as sports drinks and isotonic drinks.

Patent document 13 (EP 1 785 038 A1) refers to a process for producing a tea extract containing non-polymer catechins, which includes immersing unfermented teal leaves in ethanol or an ethanol-water solution having an ethanol concentration of from 85 to 99.5 vol% to obtain unfermented tea leaves having a percentage catechin residue of at least 80 wt% based on a catechin content of the unfermented tea leaves before the immersion in the ethanol or ethanol-water solution, and then extracting the unfermented tea leaves with warm or hot water.
Patent Document 1: JP-A-60-156614
Patent Document 2: JP-A-3-133928
Patent Document 3: JP-A-59-219384
Patent Document 4: JP-A-4-20589
Patent Document 5: JP-A-61-130285
Patent Document 6: GB-B-1428394
Patent Document 7: JP-A-11-221018
Patent Document 8: JP-A-61-209548
Patent Document 9: JP-A-52-61269
Patent Document 10: JP-A-2005-531310
Patent Document 11: JP-A-2006-122004

### Summary of the Invention

The present invention provides the following processes (1) and (2) for the production of processed teas.
(1) A process for producing a processed tea, which includes a step of mixing (A) a granulated product of a purified green tea extract, said purified product being obtainable by dissolving and extracting the green tea extract in a mixed solution of ethanol and water at a weight ratio of from 99/1 to 75/25, with (B) tea leaves at a solid weight ratio [(A)/(B)] of from 10/90 to 90/10.
(2) A process for producing a processed tea, which includes a step of coating (B) tea leaves with (A) a liquid including a purified green tea extract, said purified product being obtainable by dissolving and extracting the green tea extract in a mixed solution of ethanol and water at a weight ratio of from 99/1 to 75/25, at a solid weight ratio [(A)/(B)] of from 10/90 to 90/10.

The present invention also provides a processed tea obtainable by the above-described production processes, wherein the content of non-polymer catechins in an extract solution, which has been obtained by extracting the processed tea (10 g) with water (1,000 g) of 95°C for 5 minutes under stirring, adjusting the total weight to 1,010 g and then removing the tea leaves, is 200 mg/100 ml or higher.

The present invention further provides a processed tea product including a tea bag and the processed tea filled therein.

### Detailed Description of the Invention

The processes described in the above-described patent documents are not intended to elute catechins at high concentration, and because of low catechin contents, hardly permit ingesting catechins in sufficient amounts. Further, attempts to extract catechins in an sufficient amount give rise to more increasing bitterness , astringent taste and coarseness, thereby causing problems in taste and flavor.

The present invention is to provide a processed tea, which enables to elute non-polymer catechins at high concentration with water, and moreover, is suppressed in bitterness and astringent taste and is good in taste and flavor; and also its production process. The present invention is also to provide a processed tea product making use of the processed tea.

As a result of a study on a relationship between components contained in a green tea extract and bitterness and astringent taste, the present inventors found that a processed tea, which is reduced in bitterness and astringent taste and is suited for ingesting non-polymer catechins at high concentration, can be obtained by treating tea leaves with a purified green tea extract as obtained by dissolving and extracting the green tea extract in a mixed solution containing ethanol and water at a particular ratio.

According to the production process of the present invention, non-polymer catechins can be conveniently eluted at high concentration with water, and moreover, a processed tea suppressed in bitterness and astringent aste and having a good taste and flavor can be obtained. According to the present invention, it is, therefore, possible to provide a processed tea, which allows to ingest non-polymer catechins in large amounts and is palatable, and also a processed tea product making use of the processed tea.

Firstly, a description will be made about terms used in this specification.

The term "non-polymer catechins" as used herein is a generic term, which collectively encompasses non-epi-form catechins such as catechin, gallocatechin, catechin gallate and gallocatechin gallate, and epi-form catechins such as epicatechin, epigallocatechin, epicatechin gallate and epigallocatechin gallate. The concentration of non-polymer catechins is defined based on the total amount of the above-described eight non-polymer catechins. Such non-polymer catechins are contained in a tea extract or the like, which is obtainable by drying or concentrating an extract solution available from tea leaves of green tea, black tea or oolong tea.

Further, the term "gallate forms in non-polymer catechins" is a generic term, which collectively embraces epigallocatechin gallate, gallocatechin gallate, epicatechin gallate, and catechin gallate, while the term "non-gallate forms" is a generic term, which collectively embraces epigallocatechin, gallocatechin, epicatechin, and catechin.

The process of the present invention for the production of the processed tea is characterized by including the following step (a) or (b).
Step (a): a step of mixing a granulated product of a purified green tea extract with tea leaves.
Step (b): a step of coating tea leaves with a liquid containing a purified green tea extract.

The green tea extract, as the starting material for the purified green tea extract (A) for use in the present invention, can be obtained from tea leaves manufactured from tea leaves selected from the Genus Camellia, for example, C. sinensis, C. assamica or the Yabukita variety, a hybrid thereof, or the like. As the manufactured tea leaves, any manufactured tea leaves can be used without any particular limitation insofar as they are non-fermented tea leaves. Examples include green teas such as *sencha, bancha, gyokuro, tencha* and *kamairicha.*

The green tea extract is obtained by drying or concentrating a green tea extract solution. As a method for obtaining the green tea extract solution, a publicly-known method such as stirring extraction can be adopted. It is also possible to make combined use of boiling deaeration or an extraction method which is conducted while bubbling an inert gas such as nitrogen gas to eliminate dissolved oxygen, that is, under the so-callednon-oxidizing atmosphere. It is to be noted that as illustrative forms of the green tea extract, liquid, slurry, semi-solid and solid can be mentioned. Of these, slurry, semi-solid and solid are preferred from the viewpoint of dispersibility in the mixed solution of ethanol and water.

In the present invention, instead of employing as the green tea extract an extract solution eluted from tea leaves, it is also possible to employ a concentrated green tea extract or to employ an extract solution from green tea leaves and a concentrate of green tea extract in combination. The "concentrated green tea extract" as mentioned herein is one obtained by concentrating a solution extracted from green tea leaves with hot water or a water-soluble organic solvent, and can be produced, for example, by the method described in JP-A-59-219384, JP-A-4-20589, JP-A-5-260907, JP-A-5-306279 or the like. As the concentrated green tea extract, a commercially-available product may also be used. Examples include "POLYPHENONEHG" (MitsuiNorinCo. , Ltd.), "TEAFURAN" (ITO EN, LTD.), "SUNPHENON" (Taiyo Kagaku Co., Ltd.), and the like. As the green tea extract for use in the present invention, it is preferred to use a concentrated green tea extract, said concentrate containing non-polymer catechins at from 25 to 90 wt%, with from 30 to 90 wt% being more preferred, in terms of dry weight.

As a purification method of the green tea extract, dissolution extraction, that is, a method that removes a precipitate formed by suspending the green tea extract in a mixed solution of ethanol and water at a specific ratio can be mentioned. It is preferred to adopt a method that subjects the green tea extract to treatment in contact with activated carbon and acid clay or activated clay in a mixed solution of ethanol and water. By this step, it is possible to remove turbidity from the green tea extract and also to decrease caffeine in the green tea extract. It is to be noted that as the form of the purified green tea extract, liquid, slurry, semi-solid or solid can be mentioned, for example.

Although the weight ratio of ethanol to water in the mixed solution is from 99/1 to 75/25, it may be preferably from 97/3 to 90/10, more preferably from 95/5 to 91/9, far more preferably from 95/5 to 92/8. An adjustment to such a range makes it possible to reduce bitterness and astringent taste.

No particular limitation is imposed on the method for dispersing the green tea extract in the mixed solution of ethanol and water, insofar as the weight ratio of ethanol to water falls within the range of from 99/1 to 75/25 upon final treatment of the green tea extract. Further, the amount (in terms of solids) of the green tea extract to be used may be preferably from 10 to 40 weight parts, more preferably from 10 to 30 weight parts relative to 100 weight parts of the mixed solution of ethanol and water. This use amount makes it possible to efficiently treat the green tea extract.

No particular limitation is imposed on activated carbon for use in the purification of the green tea extract insofar as it is generally used on an industrial level. Usable examples include commercially-available products such as "ZN-50" (product of Hokuetsu Carbon Industry Co., Ltd.), "KURARAY COAL GLC", "KURARAY COAL PK-D" and "KURARAY COAL PW-D" (products of Kuraray Chemical K.K.), and "SHIROWASHI AW50", "SHIROWASHI A", "SHIROWASHI M" and "SHIROWASHI C" (products of Takeda Pharmaceutical Company Limited). The pore volume of the activated carbon may be preferably from 0.01 to 0.8 mL/g, more preferably from 0.1 to 0.7 mL/g. The specific surface area, on the other hand, may be preferably from 800 to 1,300 m²/g, more preferably from 900 to 1,200 m²/g. It is to be noted that these physical values are those determined by the nitrogen adsorption method. The amount of the activated carbon to be used may be preferably from 0.5 to 5 weight parts, more preferably from 0.5 to 3 weight parts relative to 100 parts by weight of the mixed solution of ethanol and water.

The acid clay and activated clay both contain, as general chemical components, SiO₂, Al₂O3, Fe₂O₃, CaO, MgO, etc., and those having SiO₂/Al₂O₃ ratios of from 3 to 12, preferably from 4 to 9 are preferred. More preferred are those which have compositions containing from 2 to 5 wt% of Fe₂O₃, from 0 to 1.5 wt% of CaO and from 1 to 7 wt% of MgO. Activated clay is obtained by treating a naturally-mined acid clay (montmorillonite clay) with a mineral acid such as sulfuric acid, and is a compound having a porous structure of large specific surface area and adsorptive capacity. The specific surface areas of acid clay and activated clay may preferably be from 50 to 350 m²/g. Further, their pH (5 suspensions, 25°C) may be preferably from 2.5 to 8, more preferably from 3.6 to 7. As the acid clay, a commercially-available product such as, for example, "MIZUKA-ACE #600" (product of Mizusawa Industrial Chemicals, Ltd.) can be used.

The amount of acid clay or activated clay to be used may be preferably from 2.5 to 25 weight parts, more preferably from 2.5 to 15 weight parts relative to 100 weight parts of the mixed solution of ethanol and water. If the amount of acid clay or activated clay to be added is too small, the efficiency of removal of caffeine tends to drop. If too much, on the other hand, cake resistance tends to become large in the filtration step. The ratio (weight ratio) of activated carbon to acid clay or activated clay may be preferably from 1 to 10, more preferably from 1 to 6 of the acid clay or activated clay to 1 of the activated carbon.

The green tea extract can be purified by bringing it, in a state that it is dispersed in the mixed solution of ethanol and water, into contact with activated carbon and acid clay or activated clay. It is, however, to be noted that no particular limitation is imposed on the order of addition of the respective ingredients. There can be mentioned, for example, (1) a method that includes adding the green tea extract to the mixed solution of ethanol and water, adding activated carbon, and then adding acid clay or activated clay, (2) a method that includes adding the green tea extract to the mixed solution of ethanol and water, adding acid clay or activated clay, and then adding activated carbon, (3) a method that includes adding acid clay or activated clay to the mixed solution of ethanol and water, adding the green tea extract to the resulting mixture, and then adding activated carbon, and (4) a method that includes adding activated carbon to the mixed solution of ethanol and water, adding the green tea extract to the resulting mixture, and then adding acid clay or activated clay. The purification treatment can be conducted by sequentially adding the respective ingredients as described above. It is, however, preferred to conduct filtration between the respective addition steps. Further, the green tea extract may be added in two or more portions, and filtration may be conducted between its respective addition steps.

The contact treatment of the dispersion of green tea extract with the activated carbon and the acid clay or activated clay may be conducted by any method such as a batch method or a continuous treatment method making use of a column. In general, it is possible to adopt a method that includes adding powdery activated carbon to the dispersion and conducting stirring to have caffeine selectively adsorbed and then removing the caffeine by filter operation to obtain a filtrate, a method that includes having caffeine selectively adsorbed by continuous treatment through a column packed with granular activated carbon or the like, or a like method. After the contact with the activated carbon and the acid clay or activated clay, the activated carbon and the acid clay or activated clay are removed, and the dispersion of green tea extract is then subjected to reduced-pressure distillation, further to concentration operation or the like to remove ethanol from the system.

The purified green tea extract can be obtained as described above, and the ratio of caffeine to non-polymer catechins (caffeine/non-polymer catechins) may be, in terms of weight ratio, from 0.0001 to 0.16, more preferably from 0.001 to 0.15, far more preferably from 0.01 to 0.14, still far more preferably from 0.05 to 0.13. If such a ratio is too low, the balance of taste and flavor tends to deteriorate when reconstituted into a beverage. If too high, on the other hand, the physiological effects tend to become insufficient. Caffeine may be one originated from the green tea extract employed as a starting material, one naturally contained in a flavoring, a fruit extract and/or other ingredient, or one newly added.

As the purified green tea extract in the present invention, one having a percentage of gallate forms lowered by tannase treatment can be used. The term "tannase treatment" as used herein means to treat with an enzyme having tannase activity, which can be, for example, tannase obtainable by culturing a tannase-producing fungus of the Aspergillus, Penicillium or Rhizopus genus. Preferred is tannase available from Aspergillus oryzae. This treatment with tannase can also be conducted in the production stage of either the green tea extract solution containing non-polymer catechins or the concentrated green tea extract. Tannase may preferably be added such that its amount falls within a range of from 0.5 to 10 wt% based on the non-polymer catechins in the green tea extract solution or the concentrated green tea extract. The temperature of the tannase treatment may be preferably from 15 to 40°C at which its enzyme activity is available, with from 20 to 30°C being more preferred. At the time of the tannase treatment, the pH (25°C) may be preferably from 4 to 6 at which its enzyme activity is available, with from 4.5 to 6 being more preferred, and from 5 to 6 being even more preferred.

In the tannase treatment, it is preferred to hold the green tea extract solution or the concentrated green tea extract at from 20 to 50°C, with from 20 to 40°C being more preferred, after the addition of the enzyme having tannase activity until the percentage of gallate forms in non-polymer catechins reaches from 1 to 60 wt%. In this case, the percentage of gallate forms in non-polymer catechins may be adjusted preferably to from 3 to 55 wt%, more preferably to from 5 to 50 wit%. In the control of the percentage of gallate forms by the tannase treatment, it is preferred to determine the end point of the reaction based on the level of pH of the green tea extract solution or the concentrated green tea extract during the treatment, and the pH (25°C) may be preferably from 3 to 6, more preferably from 3.5 to 5.5. Subsequently, the temperature is raised as promptly as possible to from 45 to 95°C, preferably from 75 to 95°C such that the tannase is inactivated to terminate the reaction. As a result, the bitterness and astringency are reduced, thereby making it possible to obtain a purified green tea extract having a still better taste and flavor. By the inactivation treatment of the tannase, any subsequent reduction in the percentage of gallate forms can be avoided, thereby making it possible to conveniently obtain a purified green tea extract with a desired percentage of gallate forms.

The content of gallic acid formed by the tannase treatment may preferably be 0.6 wt% or lower based on the total weight of the purified green tea extract from the viewpoint of a reduction in astringent taste. Gallic acid is contained a lot especially in fermented tea, but is contained little in non-fermented tea. The preferred content of gallic acid may be from 0.01 to 0.6 wt.%, with from 0.05 to 0.6 wt% being more preferred.

The purified green tea extract, which has been obtained as described above, is used as the ingredient (A), and its use in the form of a liquid or powder is preferred. To produce a powder, drying is conducted, for example, by a method such as freeze drying or spray drying.

Tea leaves are used as the ingredient (B) in the production process according to the present invention, and the tea leaves can be green tea leaves, black tea leaves or oolong tea leaves. Black tea leaves are fermented tea leaves, and specifically, can be black tea leaves, pu-erh tea leaves or the like manufactured through a fermentation step from tea leaves selected from the Genus Camellia, for example, *C*. *sinensis, C*. *assamica*, the Yabukita variety, or a hybrid thereof. Further, oolong tea leaves are semi-fermented tea leaves, and specifically, can be oolong tea leaves manufactured through a semi-fermentation step from tea leaves selected from the Genus Camellia, for example, *C*. *sinensis*, *C*. *assamica*, the Yabukita variety, or a hybrid thereof. It is to be noted that green tea leaves are as described above. It is also to be noted that a processed green tea is obtained when green tea leaves are used as tea leaves, a processed black tea is obtained when black tea leaves are used as tea leaves, and a processed oolong tea is obtained when oolong tea leaves are used as tea leaves.

The mixing ratio of the ingredient (A) and the ingredient (B) is from 10/90 to 90/10 in terms of solid weight ratio [(A)/(B)] from the viewpoints of the taste and flavor of a tea extract solution to be obtained by extracting the processed tea with water and the total amount of non-polymer catechins in the tea extract solution. When the ingredient (B) is green tea leaves, the mixing ratio may be preferably from 10/90 to 50/50, more preferably from 10/90 to 40/60 , far more preferably from 15/85 to 25/75. When the ingredient (B) is black tea leaves or oolong tea leaves, on the other hand, the above-described ratio [(A) / (B)] may be preferably from 20/80 to 50/50, more preferably from 25/75 to 40/60.

In the step (a), the granulated product of the purified green tea extract and the tea leaves are mixed with each other. It is possible to adopt, as a mixing manner, a known rotating vessel type (horizontal cylinder, twin-cylinder, double-cone or cubic) or a known fixed vessel type (ribbon, screw, conical screw, paddle, fluidized bed or Philips blender).

The granulation method for the purified green tea extract can be either a dry-type method or a wet-type method. To achieve an optimal efficiency of extraction, however, wet-type granulation that conducts granulation by using adhesive power of water or a binder is preferred. As the binder, for example, carbohydrate such as dextrin can be used. Examples of preferred granulation methods include spray-drying, freeze-drying, fluidized bed granulation and tumbling granulation. The granulation can be conducted by using two or more of these granulation methods in combination. As drying temperatures in the respective granulation methods, it is possible to adopt, for example, from -50 to 50°C for freeze drying, from 50°C to 120°C for spray drying, from 20 to 50°C for fluidized bed granulation, and from 20 to 60°C for tumbling granulation.

Spray-drying is a drying method that sprays a liquid material into a counter-current or parallel air flow to obtain spherical particles by transfer of heat and the material between liquid droplets and the air flow. Spray-drying is simple in steps, and therefore, is suited for continuous operation, mass production and quality control.

In freeze-drying, a liquid material is frozen at a low temperature, and subsequent to grinding, a small quality of heat is added under vacuum (4.6 Torr or lower) . At this time, ice is not converted into water but is allowed to sublimate as is, so that only powder particles are left. The powder particles so obtained have not been exposed to heat of high temperature unlike spray drying, and therefore, have a merit that the flavor and taste are hardly impaired.

In fluidized bed granulation, continuous motion of individual material particles is ensured to fluidize the mixture into a sufficiently spread state. Then, a binder solution is sprayed into the fluidized bed and a heated air flow is caused to pass through the fluidized bed, so that the purified green tea extract is dried at the same time. The fluidization step is continued until the content of water in the purified product of green tea extract is lowered to from 3 to 8 wt%, preferably to approx. 5 wt% or lower. The granulated product obtained by this granulationmethod is porous and readily soluble, and is predominantly spherical in shape.

Tumbling granulation is a method that conducts granulation by feeding a powder and also adding an appropriate amount of a binder into a cylindrical vessel tilted at from 40 to 50° with respect to the horizon and rotating at from 10 to 30 rpm. The ingredients are allowed to grow into particles while being tumbled, so that a granulated product having a somewhat broad particle size distribution is obtained. Tumbling granulation may additionally require a drying step, because water may remain in some instances.

Of these, a two-step method that subsequent to the formation of a primary powder by spray-drying or freeze-drying, a secondarypowder is formed by fluidized bed granulation or tumbling granulation is preferred as a granulation method for the purified green tea extract from the standpoints of providing the purified product with improved solubility and preventing caking.

The average particle size of the granulated product of the purified green tea extract, said granulated product having been obtained as described above, may be preferably from 100 to 5,000 µm, more preferably from 250 to 2,000 µm. The formation into such a fine powder facilitates the dissolution of non-polymer catechins in water, thereby making it possible to conveniently ingest non-polymer catechins at high-concentration. It is to be noted that the term "average particle size" as used herein means a value as measured in accordance with the sieving test method in JIS K 0069 Chemical Products.

In the step (b), on the other hand, the liquid with the purified green tea extract contained therein is applied to the tea leaves to coat the tea leaves at outer surfaces thereof with the purified green tea extract. As a method for applying the liquid that contains the purified green tea extract, the above-described tumbling granulation or fluidized bed granulation can be used. More specifically, it is possible to adopt a method that includes feeding the solid starting material beforehand in a tumbling granulator or fluidized bed granulator and then spray-coating the liquid which contains the purified green tea extract. Upon conducting the spray-coating, a carbohydrate such as dextrin may be used as a binder in combination.

In the production process according to the present invention, it is possible to add powder flavorings (flavors), fruit chips, fruit concentrates (fruit juices) and fruit powders to improve the taste. They can be used no matter whether they are natural or synthetic, and can preferably be selected from fruit juices, fruit flavors, plant flavors, and mixtures thereof. A combination of a fruit juice with a tea flavor, (preferably, a green tea, black tea or oolong tea flavor) is more preferred. Usable fruit extracts include apple, pear, lemon, lime, mandarin, grapefruit, cranberry, orange, strawberry, grape, kiwi, pineapple, passion fruit, mango, guava, raspberry, and cherry juices. More preferred are citrus juices (preferably, grapefruit, orange, lemon, lime and mandarin juices), mango juice, passion fruit juice, guava juice, and mixtures thereof. The total amount of powder flavorings, fruit chips, fruit concentrates and fruit powders may be preferably from 0.001 to 20 wt%, more preferably from 0.002 to 10 wt% based on the total weight of the processed tea.

Preferred natural flavors include jasmine, chamomile, rose, peppermint, Crataegus cuneata, chrysanthemum, water caltrop, sugarcane, litchi, bamboo shoot, and the like. More preferred flavorings are citrus flavors including orange flavor, lemon flavor, lime flavor and grapefruit flavor. In addition to such citrus flavors, various other fruit flavors such as apple flavor, grape flavor, raspberry flavor, cranberry flavor, cherry flavor and pineapple flavor are also usable. These flavors can be derived from natural sources such as fruit extracts and balms, or can be synthesized. The term "powder flavoring" can also include blends of various flavors, for example, a blend of lemon and lime flavors and blends of citrus flavors and selected spices (typically, cola and soft drink flavors). The amount of such a powder flavoring to be added may be preferably from 0.0001 to 5 wt%, more preferably from 0.001 to 3 wt% based on the total weight of the processed tea.

In the production process according to the present invention, a herb or herb extract can be added to improve the taste and health-related functions. The term "herb extract" means an extract of a herb such as a medicinal herb or sweet herb. Suited as herbs include, for example, chamomile, lemon verbena, hibiscus, rose, lemon grass, lemon balm, marrow, lavender, rosemary, thyme, linden, sage, juniper, basil, allspice, jasmine, cinnamon, fennel, malva sylvestris, masai, laurel, chicory, stevia, juniper berry, mint, hyssop, dandelion, orange flower, corn flower, alfalfa, clove, elder, caraway, sunflower, sweet violet, oregano, dandelion, marjoram, savory, turmeric, roselle, meadowsweet, marshmallow, marigold, wild strawberry, yarrow, orange blossom, eucalyptus, serpyllum, vanilla beans, orange peels, lemon peels, apple peels, and geranium. They may be used singly, but preferably, two or more herbs may be mixed and used. Depending on the kind of a herb, it has sweetness, strong sourness or strong bitterness. A suitable combination of two or more herbs makes it possible to achieve a balance in taste so that a mild and palatable beverage can be formulated. When two or more herbs are mixed, preferred combinations include, for example, combinations of chamomile and peppermint, hibiscus and rose, lemon grass and lemon balm, marrow blue and hibiscus, lavender and rose, rosemary and thyme, linden and peppermint, sage and lemon balm, juniper and chamomile, basil and allspice, jasmine and thyme, thyme and peppermint, chamomile and cinnamon, fennel and hibiscus, malva sylvestris and chamomile, masai and rosehip, chicory and hibiscus, stevia and peppermint, juniper berry and mint, and hyssop and mint, and the mixing ratio varies depending on the kind of herbs to be mixed together. A part to be used varies depending on the kind of each herb, including flowers, leaves, fruits, roots, skins, stems, seeds, whole weed, or the like. The total amount of one or more herbs and herb extracts to be added may be preferably from 1.0 to 10.0 wt%, more preferably from 0.5 to 5.0 wt% based on the total weight of the processed tea.

The processed tea obtained as described above may have a solid content of preferably 90.0 wt% or higher, more preferably 95.0 wt% or higher, far more preferably 98.0 wt% or higher from the viewpoints of preservation and antibacterial properties and handling.

Further, the content of non-polymer catechins in an extract solution, which has been obtained by extracting the processed tea (10 g) with water (1,000 g) of 95°C for 5 minutes under stirring, adjusting the total weight to 1,010 g and then removing tea leaves, may be preferably 200 mg/100 mL or higher, morepreferably 210 mg/100 mL or higher, far more preferably 220 mg/100 mL or higher. When the content of non-polymer catechins is 200 mg/100 mL or higher as described above, a large amount of non-polymer catechins can be easily ingested, and moreover, the physiological effects of non-polymer catechins can be expected. It is to be noted that from the viewpoint of suppression of bitterness and astringent taste, the upper limit of the content of non-polymer catechins may preferably be 600 mg/100 mL, with 500 mg/100 mL being more preferred.

Further, gallate forms as ester-form non-polymer catechins have strong bitterness. Therefore, in the processed tea according to the present invention, the percentage of gallate forms based on non-polymer catechins, in other words, the percentage of gallate forms in non-polymer catechins may, therefore, be preferably from 5 to 55 wt%, more preferably from 8 to 50 wt%, far more preferably from 10 to 45 wt%.

Similar to general tea products, powder beverages or powder foods, the processed tea obtained by the production process of the present invention can be packed into a processed tea product with a packaging material made of an aluminum evaporated film or the like. It may also be filled in permeable brewing packages such as tea bags. The brewing packages can be furnished with dimensions determined with an intention to provide the brewable tea product in teapots or cups.

### Examples

### (Measurement of non-polymer catechins)

After an extract solution of a processed tea according to the present invention was diluted to 100 g with deionized water, the diluted extract solution was filtered through a membrane filter (0.8 µm), and then diluted with distilled water to provide a sample. Using a high-performance liquid chromatograph (model: "SCL-10AVP") manufactured by Shimadzu Corporation, a liquid chromatograph column packed with octadecyl group-introduced silica gel, "L-Column, TM ODS" (4.6 mm in diameter × 250 mm; product of Chemicals Evaluation and Research Institute, Japan) was fitted. The sample was measured at a column temperature of 35°C by the gradient elution method. A mobile phase, Solution A, was a 0.1 mol/L solution of acetic acid in water, while another mobile phase, Solution B, was a 01 mol/L solution of acetic acid in acetonitrile. The measurement was conducted under the conditions of 20 µL sample injection volume and 280 nm UV detector wavelength. The concentration of catechins was expressed in terms of weight/volume % (%[w/v]).

### Concentration gradient conditions (vol%)

| Time | Mobile phase A | Mobile phase B |
|---|---|---|
| 0 min | 97% | 3% |
| 5 min | 97% | 3% |
| 37 min | 80% | 20% |
| 43 min | 80% | 20% |
| 43.5 min | 0% | 100% |
| 48.5 min | 0% | 100% |
| 49 min | 97% | 3% |
| 62 min | 97% | 3% |

### (Assessment of taste and flavor)

With respect to a beverage prepared by diluting an extract solution of a processed tea obtained in each example or comparative example with deionized water to lower the concentration of non-polymer catechins to 0.13 wt%, a drinking test was performed by a panel of five trained assessors. In the drinking test, the beverage was assessed for its bitterness and astringent taste in accordance with the below-described standards. Subsequently, final scores were determined at intervals of 0.5 after deliberation.

### (Assessment standards for bitterness)

1: Substantially no bitterness
2: Fairly weak bitterness
3: Normal bitterness
4: Intense bitterness

### (Assessment standards for astringent taste)

1: Substantially no astringent taste
2: Fairly weak astringent taste
3: Normal astringent taste
4: Intense astringent taste

### Example 1

### (Production of purified green tea extract]

A commercial concentrated green tea extract (1,000 g) ("POLYPHENONE HG", Mitsui Norin Co., Ltd.) was suspended in a 95 wt% aqueous solution of ethanol (9,000 g) under stirring conditions of room temperature and 200 r/min. After activated carbon ("KURARAY COAL GLC", product of Kuraray Chemical K.K.; 200 g) and activated clay ("MIZKA ACE #600", product of Mizusawa Chemical Industries, Ltd.; 500 g) were charged, the resulting mixture was continuously stirred for about 10 minutes. Still at room temperature, stirring was then continued for about 30 minutes. After the activated carbon and precipitates were then filtered off by using No. 2 filter paper, the filtrate was filtered again through a 0.2 µm membrane filter. Finally, deionized water (200 g) was added to the filtrate, ethanol was distilled off at 40°C and 3.3 kPa to achieve reduced-pressure concentration. An aliquot (750 g) of the concentrate was placed in a stainless steel vessel, the total amount was brought to 10, 000 g with deionized water, and then, a 5 wt% aqueous solution of sodium bicarbonate (30 g) was added to adjust its pH to 5.5. Under stirring conditions of 22°C and 150 r/min, a solution of "TANNASE KTFH" (Industrial Grade, 500 U/g minimum, product of Kikkoman Corporation; 2.7 g) dissolved in deionized water (10.7 g) was then added. Upon elapsed time of 55 minutes at which the pH had dropped to 4.24, the enzyme reaction was terminated. The stainless steel vessel was next immersed in a hot bath of 95°C, and was held at 90°C for 10 minutes to completely inactivate the enzyme activity. After the stainless steel vessel was next cooled to 25°C, concentration processing was conducted to obtain a purified green tea extract in the form of a liquid the Brix degree of which was 25. Further, spray drying was conducted to obtain a purified green tea extract in the form of a powder.

### (Granulation of purified green tea extract)

Using a pan-type dry granulator (inner diameter: 540 mm, depth: 373 mm, "DPZ-01", AS ONE Corporation) as a tumbling granulator, an aliquot (500 g) of the resulting powdery purified green tea extract was subjected to granulation at 25°C, an inclination of 45° with respect to the horizon, and a tumbling speed of 22 rpm. Water was carefully sprayed into the pan-type dry granulator until particles of from 0.1 to 0.5 mm in particle size were obtained. The particles were next taken out and dried for 4 hours in a reduced-pressure drier controlled at 25°C. Subsequently, a granulated product of the purified green tea extract (minus 22 mesh) was obtained.

### (Processed green tea)

Charged into a "V-TYPE MICROMIXER MODEL S-3" (manufactured by Tsutsui Scientific Instruments Co., Ltd.) were the resulting granulated product (200 g) of the purified green tea extract and middle-grade green tea leaves (800 g) from Miyazaki. By powder blending, a processed green tea was obtained.

An aliquot (10 g) of the resulting processed green tea was charged into a beaker in which water (1,000 g) was under stirring at 100 rpm while being maintained at 95°C, and the extraction was conducted for 5 minutes. After completion of the extraction, the total amount was adjusted to 1, 010 g with water. The tea leaves were then removed by using a 20-mesh sieve, followed by cooling to 25°C with iced water. Filtration was then conducted by using No. 2 filter paper to obtain an extract solution. The composition of the processed green tea, the content of non-polymer catechins in the extract solution and the assessment results of its taste and flavor are shown in Table 1.

### Example 2

### (Production of purified green tea extract)

The powdery purified green tea extract, which was produced in Example 1, was used.

### (Granulation of purified green tea extract)

A granulated product of the purified green tea extract was obtained by a similar procedure as in Example 1.

### (Processed black tea)

A processed black tea and its extract solution were obtained by a similar procedure as in Example 1 except for the use of the granulated product (350 g) of the purified green tea extract and Kenyan CTC black tea leaves (650 g). The composition of the processed black tea, the content of non-polymer catechins in the extract solution and the assessment results of its taste and flavor are shown in Table 1.

### Example 3

### (Production of purified green tea extract)

The powdery purified green tea extract, which was produced in Example 1, was used.

### (Granulation of purified green tea extract)

A granulated product of the purified green tea extract was obtained by a similar procedure as in Example 1.

### (Processed oolong tea)

A processed oolong tea and its extract solution were obtained by a similar procedure as in Example 1 except for the use of the granulated product (300 g) of the purified green tea extract and oolong tea leaves (700 g) from Fujian. The composition of the processed oolong tea, the content of non-polymer catechins in the extract solution and the assessment results of its taste are shown in Table 1.

### Example 4

### (Processed green tea)

Using a pan-type dry granulator as a tumbling granulator, middle-grade green tea leaves (400 g) from Miyazaki were charged into a vessel which was controlled at 25°C, was tilted at an angle of 45° with respect to the horizon and was tumbling at 22 rpm. The purified green tea extract (167 g), which had been produced as a liquid in Example 1, was carefully sprayed onto the middle-grade green tea leaves. The green tea leaves were next taken out and dried for 30 minutes in a drier controlled at 50°C. Subsequently, a processed green tea was obtained. By a similar procedure as in Example 1, an extract solution was then obtained. The composition of the processed green tea, the content of non-polymer catechins in the extract solution and the assessment results of its taste and flavor are shown in Table 1.

### Example 5

### (Processed black tea)

A processed black tea and its extract solution were obtained by a similar procedure as in Example 4 except for the use of the liquid purified green tea extract (291.5 g) and Kenyan CTC black tea leaves (325 g) . The composition of the processed black tea, the content of non-polymer catechins in the extract solution and the assessment results of its taste and flavor are shown in Table 1.

### Example 6

### (Processed black tea)

Charged into the "V-TYPE MICROMIXER MODEL S-3" were the granulated product (350 g) of the purified green tea extract as obtained in Example 1, Kenyan black tea leaves (610 g), a powdery lemon flavoring (20 g), and a commercial dry orange peels (20 g). By powder blending, a processed black tea was obtained. By a similar procedure as in Example 1, an extract solution was then obtained. The composition of the processed black tea, the content of non-polymer catechins in the extract solution and the assessment results of its taste and flavor are shown in Table 1.

### Example 7

### (Processed green tea)

A processed green tea and its extract solution were obtained by a similar procedure as in Example 1 except that a purified green tea extract was obtained using a 99 wt% aqueous solution of ethanol. The composition of the processed green tea, the content of non-polymer catechins in the extract solution and the assessment results of its taste and flavor are shown in Table 1.

### Example 8

### (Processed green tea)

A processed green tea and its extract solution were obtained by a similar procedure as in Example 1 except that a purified green tea extract was obtained using an 80 wt% aqueous solution of ethanol. The composition of the processed green tea, the content of non-polymer catechins in the extract solution and the assessment results of its taste and flavor are shown in Table 1.

### Examples 9-10

### (Processed green teas)

Processed green teas and their extract solutions were obtained by a similar procedure as in Example 1 except that the granulated product of the purified green tea extract and the middle-grade green tea leaves were added at the corresponding ratios described in Table 1, respectively. The compositions of the processed green teas, the contents of non-polymer catechins in the extract solutions and the assessment results of their taste and flavor are shown in Table 1.

### Comparative Example 1

A processed green tea and its extract solution were obtained by a similar procedure as in Example 1 except that the purified green tea extract was not used. The composition of the processed green tea, the content of non-polymer catechins in the extract solution and the assessment results of its taste and flavor are shown in Table 1.

### Comparative Example 2

A processed green tea and its extract solution were obtained by a similar procedure as in Example 1 except for the use of a concentrated green tea extract (200 g) from China and middle-grade green tea leaves (800 g) from Miyazaki. The composition of the processed green tea, the content of non-polymer catechins in the extract solution and the assessment results of its taste and flavor are shown in Table 1.

### Comparative Example 3

A processed black tea and its extract solution were obtained by a similar procedure as in Example 2 except that the purified green tea extract was not used. The composition of the processed black tea, the content of non-polymer catechins in the extract solution and the assessment results of its taste and flavor are shown in Table 1.

### Comparative Example 4

"POLYPHENONE HG" (product of Tokyo Food Techno Co. , Ltd., 1,000 g) was dissolved in water (2,370 g), and into the aqueous solution of "POLYPHENONE HG" , a 70 wt% aqueous solution of ethanol (6,630 g) was added dropwise over 30 minutes. The resulting mixture was then subjected to aging for 30 minutes under stirring. After the aging, the mixture was coarsely filtered through No. 2 filter paper, and further filtered through filter paper of 0.2 µm mesh to eliminate insolubles. After water (200 mL) was added to the resulting filtrate, a granulated product of the purified green tea extract was obtained by a similar procedure as in Example 1. By a similar procedure as in Example 1, a processed green tea and its extract solution were then obtained. The composition of the processed green tea, the content of non-polymer catechins in the extract solution and the assessment results of its taste and flavor are shown in Table 1.

### Comparative Example 5

A processed green tea and its extract solution were obtained by a similar procedure as in Example 1 except that the granulated product of the purified green tea extract and the middle-grade green tea leaves were added at the corresponding ratio described in Table 1. The composition of the processed green tea, the contents of non-polymer catechins in the extract solution and the assessment results of its taste and flavor are shown in Table 1.

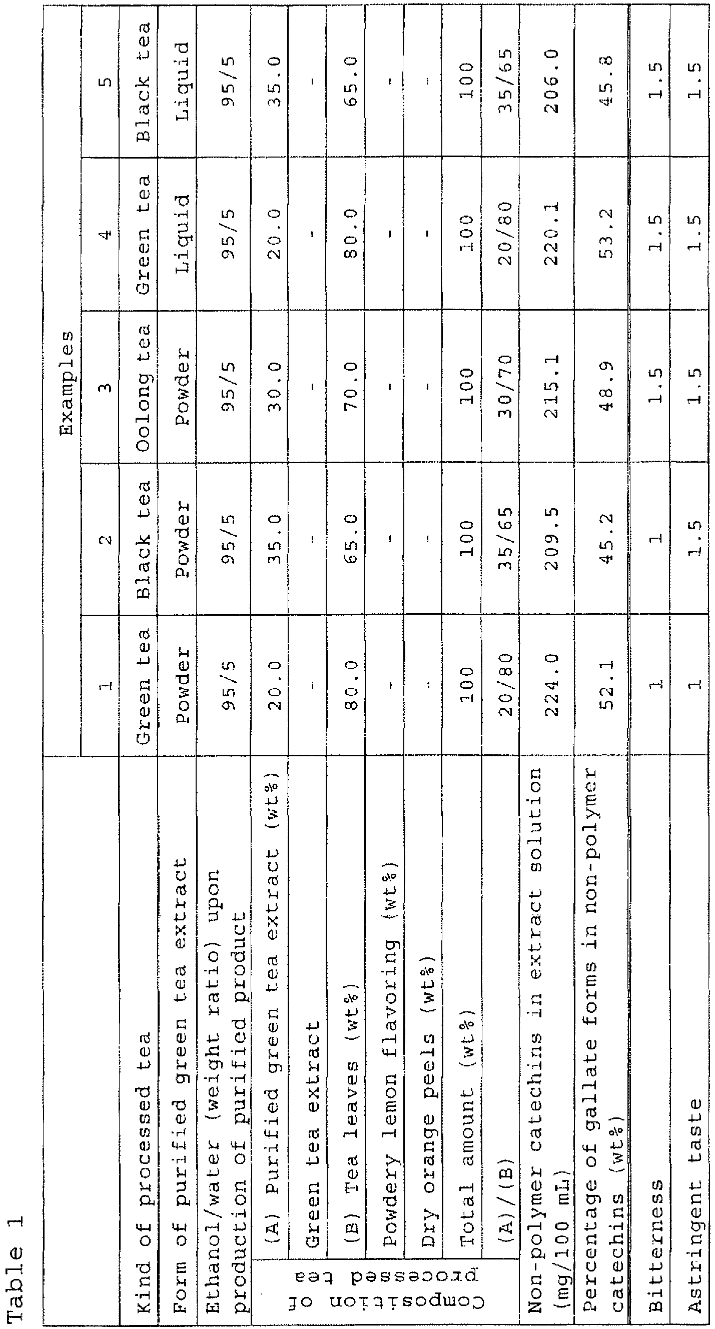

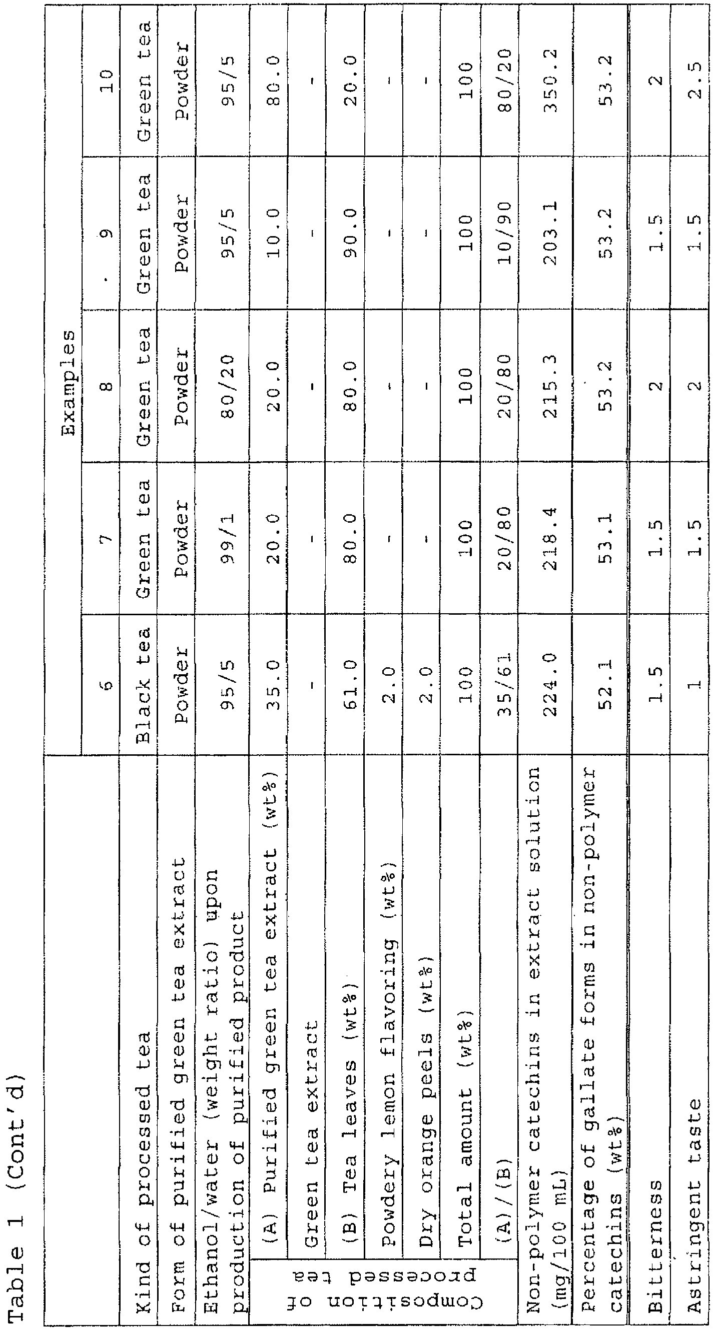

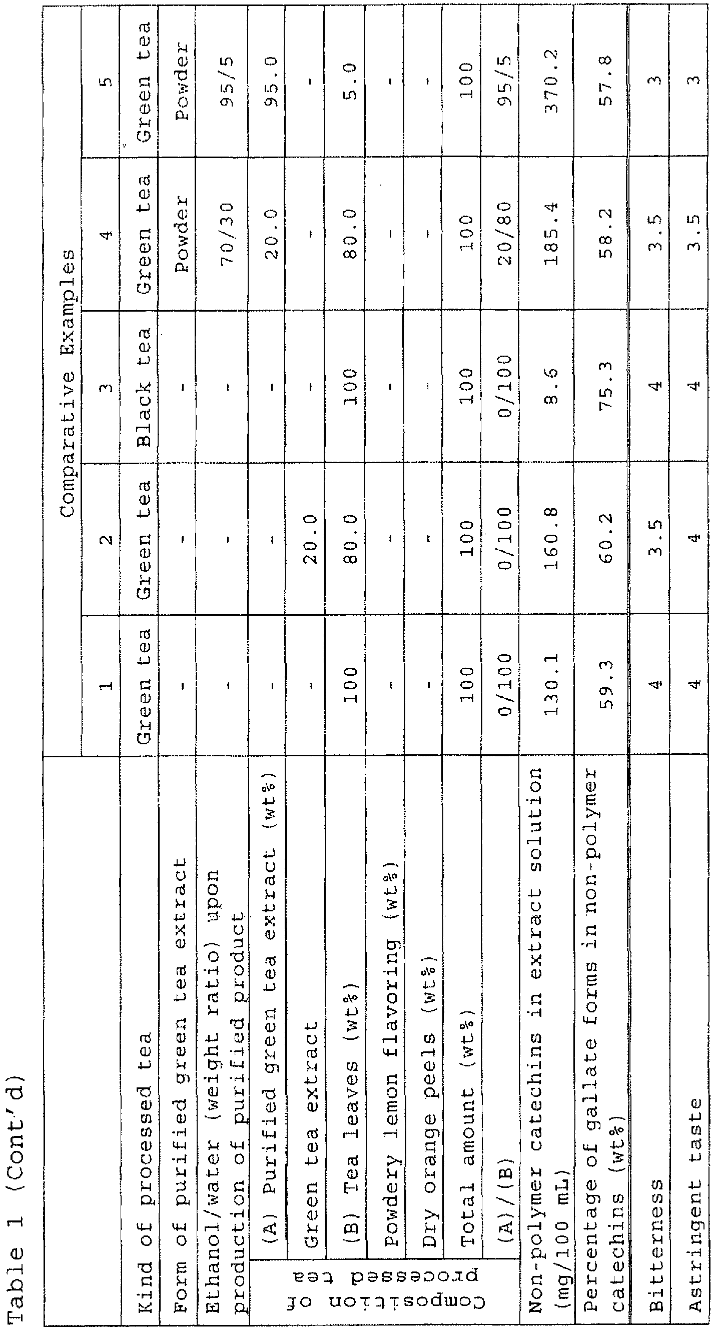

### Example 11

### (Production of processed black tea product)

A processed black tea product was produced by filling the processed black tea (2 g), which had been obtained in Example 6, in an baggy-shaped tea bag (40 mm x 150 mm) made of a nonwoven fabric of mixed spun, polyester long fibers and polyethylene long fibers. The assessment results of its taste and flavor are shown in Table 2.

### Comparative Example 6

A processed black tea was obtained by a similar procedure as in Example 6 except that a concentrated green tea extract (175 g) from China was used in place of the purified green tea extract, Kenyanblack tea leaves (305 g) were employed, and in addition, a powdery lemon flavoring (10 g) and commercial dry orange peels (10 g) were used. A processed black tea product was then produced by a similar procedure as in Example 11. The assessment results of its taste and flavor are shown in Table 2.

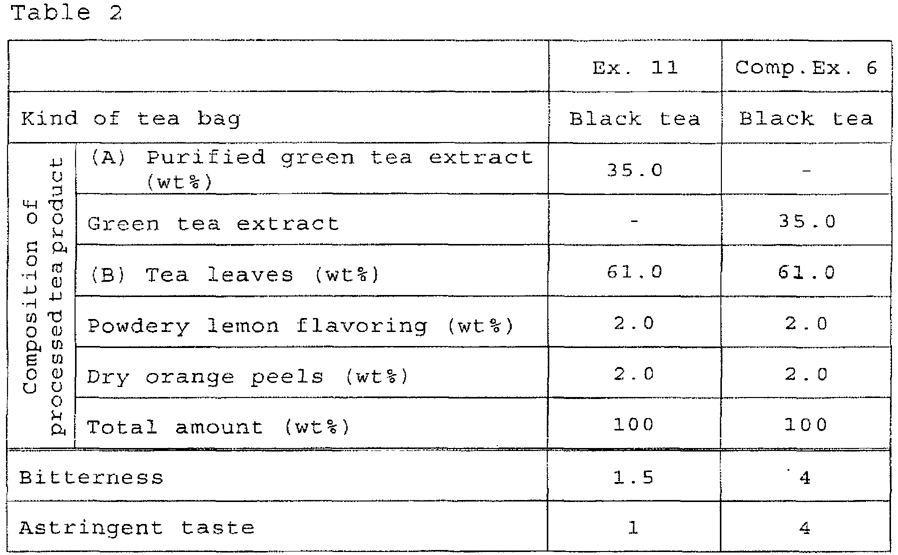

It is apparent from Table 1 that the processed teas of Examples 1-10, each of which was obtained by the corresponding one of the production processes of the present invention, make it possible to elute non-polymer catechins at high concentration with water, and moreover, are suppressed in bitterness and astringent taste. It is also clear from Table 2 that Example 11 directed to the processed tea product according to the present invention is suppressed in bitterness and astringent taste compared with the processed tea product with the conventional green tea extract added therein.

## Claims

1. A process for producing a processed tea, which comprises a step of mixing (A) a granulated product of a purified green tea extract, said purified product being obtainable by dissolving and extracting the green tea extract in a mixed solution of ethanol and water at a weight ratio of from 99/1 to 75/25, with (B) tea leaves at a solid weight ratio [(A)/(B)] of from 10/90 to 90/10.

2. A process for producing a processed tea, which comprises a step of coating (B) tea leaves with (A) a liquid comprising a purified green tea extract, said purified product being obtainable by dissolving and extracting the green tea extract in a mixed solution of ethanol and water at a weight ratio of from 99/1 to 75/25, at a solid weight ratio [(A)/(B)] of from 10/90 to 90/10.

3. The process according to claim 1 or 2, wherein the tea leaves are green tea leaves.

4. The process according to claim 1 or 2, wherein the tea leaves are black tea leaves.

5. The process according to claim 1 or 2, wherein the tea leaves are oolong tea leaves.

6. The process according to any one of claims 1-5, wherein a percentage of gallate forms in non-polymer catechins is from 5 to 55 wt.%.

7. A processed tea obtainable by the process according to any one of claims 1-6, wherein the content of non-polymer catechins in an extract solution, which has been obtained by extracting the processed tea (10 g) with water (1,000 g) of 95 °C for 5 minutes under stirring, adjusting the total weight to 1,010 g and then removing the tea leaves, is 200 mg/100 ml or higher.

8. A processed tea product comprising a tea bag and the processed tea according to claim 7 filled therein.

## Patentansprüche

1. Verfahren zur Herstellung von verarbeitetem Tee, das einen Schritt des Mischens von (A) einem granulierten Produkt eines gereinigten Grüntee-Extrakts, wobei das gereinigte Produkt durch Auflösen und Extrahieren von Grüntee-Extrakt in einer gemischten Lösung von Ethanol und Wasser in einem Gewichtsverhältnis von 99/1 bis 75/25 erhältlich ist, mit (B) Grünteeblättern in einem Feststoffgewichtsverhältnis [(A)/(B)] von 10/90 bis 90/10 umfasst.

2. Verfahren zur Herstellung von verarbeitetem Tee, das einen Schritt des Beschichtens von (B) Teeblättern mit (A) einer Flüssigkeit, die ein gereinigtes Grüntee-Extrakt umfasst, wobei das gereinigte Produkt durch Auflösen und Extrahieren von Grüntee-Extrakt in einer gemischten Lösung von Ethanol und Wasser in einem Gewichtsverhältnis von 99/1 bis 75/25 erhältlich ist, in einem Feststoffgewichtsverhältnis [(A)/(B)] von 10/90 bis 90/10 umfasst.

3. Verfahren gemäß Anspruch 1 oder 2, worin die Teeblätter Grünteeblätter sind.

4. Verfahren gemäß Anspruch 1 oder 2, worin die Teeblätter Schwarzteeblätter sind.

5. Verfahren gemäß Anspruch 1 oder 2, worin die Teeblätter Oolong-Teeblätter sind.

6. Verfahren gemäß irgendeinem der Ansprüche 1 bis 5, worin der Prozentsatz der Gallatformen in den nicht-polymeren Katechinen 5 bis 55 Gew.% beträgt.

7. Verarbeiteter Tee, erhältlich durch das Verfahren gemäß irgendeinem der Ansprüche 1 bis 6, worin der Gehalt an nicht-polymeren Katechinen in einer Extraktlösung, die durch Extrahieren des verarbeiteten Tees (10 g) mit Wasser (1.000 g) bei 95°C über 5 Minuten unter Rühren, Einstellen des Gesamtgewichts auf 1.010 g und dann Entfernen der Teeblätter, erhalten wird, 200 mg/100 ml oder höher ist.

8. Verarbeitetes Teeprodukt, das einen Teebeutel und den darin eingefüllten verarbeiteten Tee gemäß Anspruch 7 umfasst.

## Revendications

1. Procédé de production d'un thé traité, qui comprend une étape consistant à mélanger (A) un produit granulé d'un extrait de thé vert purifié, ledit produit purifié pouvant être obtenu par dissolution et extraction de l'extrait de thé vert dans une solution mélangée d'éthanol et d'eau à un rapport pondéral allant de 99/1 à 75/25, avec (B) des feuilles de thé à un rapport pondéral en matières solides [(A)/(B)] allant de 10/90 à 90/10.

2. Procédé de production d'un thé traité, qui comprend une étape consistant à couvrir (B) des feuilles de thé avec (A) un liquide comprenant un extrait de thé vert purifié, ledit produit purifié pouvant être obtenu par dissolution et extraction de l'extrait de thé vert dans une solution mélangée d'éthanol et d'eau à un rapport pondéral allant de 99/1 à 75/25, à un rapport pondéral en matières solides [(A)/(B)] allant de 10/90 à 90/10.

3. Procédé selon la revendication 1 ou 2, dans lequel les feuilles de thé sont des feuilles de thé vert.

4. Procédé selon la revendication 1 ou 2, dans lequel les feuilles de thé sont des feuilles de thé noir.

5. Procédé selon la revendication 1 ou 2, dans lequel les feuilles de thé sont des feuilles de thé oolong.

6. Procédé selon l'une quelconque des revendications 1 à 5, dans lequel un pourcentage de formes de gallate dans des catéchines non polymères est de 5 à 55% en poids.

7. Thé traité pouvant être obtenu par le procédé selon l'une quelconque des revendications 1 à 6, dans lequel la teneur en catéchines non polymères dans une solution d'extrait, qui a été obtenue par extraction du thé traité (10 g) avec de l'eau (1000 g) à 95°C pendant 5 minutes sous agitation, ajustement du poids total à 1010 et puis élimination des feuilles de thé, est de 200 mg/100 ml ou plus.

8. Produit à base de thé traité comprenant un sachet de thé et le thé traité selon la revendication 7 remplissant celui-ci.
